# EUROPÄISCHE PATENTSCHRIFT

(11) **EP 1 034 864 B1**
(45) Veröffentlichungstag und Bekanntmachung des Hinweises auf die Patenterteilung: **22.12.2004**
(21) Anmeldenummer: 00104663.0
(22) Anmeldetag: 03.03.2000
(51) Int. Cl.: B23B 51/02

(54) **Steinbohrer**
Masonery drill
Foret à pierre

(30) Priorität: 05.03.1999 DE 29904056 U
(43) Veröffentlichungstag der Anmeldung: 13.09.2000
(73) Patentinhaber: DreBo Werkzeugfabrik GmbH, D-88361 Altshausen (DE)
(72) Erfinder: Dreps, Klaus, c/o DreBo Werkzeugfabrik GmbH, 88361 Altshausen (DE)
(74) Vertreter: Baronetzky, Klaus, Dipl.-Ing.

(56) Entgegenhaltungen:
- EP-A- 0 761 927
- DE-U- 29 819 388
- US-A- 2 600 286
- US-A- 4 259 341

## Beschreibung

Die Erfindung betrifft einen Steinbohrer, gemäß dem Oberbegriff von Anspruch 1.

Ein derartiger Steinbohrer ist beispielsweise aus der EP 0 761 927 A1 bekannt. Bei diesem Bohrer ist eine Hartmetallplatte vorgesehen, die sich in an sich bekannter Weise quer durch die Bohrerspitze erstreckt und dort verankert ist. Diese Hartmetallplatte weist eine Hartmetallspitze auf, die gegenüber den schrägen Schneidflächen der Hartmetallplatte vorspringt. Hiermit soll eine bessere Zentrierung des Hartmetallbohrers beim Bohransatz erreicht werden.

Im Leistungsbereich von Schlagbohrern vermag diese spezielle Hartmetallspitze tatsächlich eine bessere Zentrierung gerade beim Ansetzen des Bohrers zu gewährleisten. Allerdings wird dieser Vorteil mit dem Nachteil erkauft, daß die Hartmetallplatte nicht nur schneller verschleißt, sondern insbesondere auch leichter zum Brechen neigt.

Zwar ist die Belastung bei Schlagbohrmaschinen, für welche der Bohrer gemäß der EP 0 761 927 A1 bestimmt ist, noch beherrschbar. Jedoch ein entsprechender Bohrer für Hammerbohrmaschinen eingesetzt wird, ist der Verschleiß zum einen erheblich größer, zum anderen neigt die Hartmetallspitze aber dazu, bereits nach kurzer Zeit abzusplittern, so daß der Vorteil der Zentrierung, der bei einem neuen Bohrer besteht, rasch zunichte gemacht wird.

Ferner ist es bereits bekannt geworden, die Schneidenkontur einer Hartmetallplatte nicht je gerade verlaufen zu lassen, sondern mehrere wellenförmige Abwinklungen vorzunehmen. Zwar ist ein derartiger Bohrer auch für Hammerbohrer geeignet, wenn ein zu starkes Vorsprungmaß vermieden wird. Doch entsteht bei einem derartigen Bohrer eine längere Anliegelinie, so daß die Flächenpressung reduziert und dementsprechend der Bohrfortschritt vermindert wird. Ein derartiger Bohrer hat sich daher nicht durchgesetzt.

Während die bislang eingesetzten Steinbohrer für Beton, auch recht harten Beton, in der Regel ausreichend sind und lange Standzeiten aufweisen, besteht bei Renovierungsarbeiten, aber auch bei Neubauten, häufig das Problem, daß auch ausgesprochen inhomogenes Material gebohrt werden muß, und insbesondere, daß auch die für die Armierungen verwendeten Materialien eine höhere Festigkeit haben, so daß die an sich gute Haltbarkeit der Bohrer durch Kantenbrüche stark reduziert wird, wenn ein Armierungstreffer vorliegt.

Grundsätzlich ist es zwar möglich, mit Metallsuchgeräten zu überprüfen, wo Armierungen liegen. Die Suchgenauigkeit preisgünstigerer Geräte läßt jedoch zu wünschen übrig, und ein derartiges Gerät ist auch nicht immer zur Hand.

Um Kantenbrüche zu vermeiden, können erfahrene Monteure den Vortrieb reduzieren, wenn eine Armierung angeschnitten wird, indem der Druck auf die Bohrmaschine reduziert wird. Weniger erfahrene Monteure können häufig das unterschiedliche Bohrgefühl für reinen Beton und die Armierung nicht recht auseinanderhalten, wobei dies bei den Bohrmaschinen mit zunehmender Leistung auch schwieriger wird. Zudem hält das Durchschneiden der Armierungen mit reduziertem Vortrieb überproportional auf, denn hierdurch wird auch der Bohrfortschritt drastisch reduziert, so daß das vorsichtige Durchtrennen einer Armierung manchmal genauso lange dauert wie die gesamte Fertigstellung des Bohrlochs im übrigen.

Ferner sind bereits Bohrer vorgeschlagen worden, die mit einem eher geringen Schneidwinkel arbeiten und hierdurch die Hauptschneide, aber auch die Nebenschneide an ihren Ecken besser abstützen. Diese Bohrer haben jedoch einen reduzierten Bohrfortschritt, wobei vor allem durch die Reduktion des Vorschneidwinkels unter eine bestimmte Grenze die Schneidwirkung gerade auch der Nebenschneide deutlich reduziert wird. Offenbar wird bei jedem Bohrschlag das zu schneidende Material dann eher komprimiert als seitlich wegtransportiert, so daß der Bohrer dann gegen eine Art Kissen aus Bohrklein arbeiten muß und der Bohrfortschritt entsprechend reduziert ist.

Daher liegt der Erfindung die Aufgabe zugrunde, einen Bohrer gemäß dem Oberbegriff von Anspruch 1 zu schaffen, der im wesentlichen bei Beibehaltung des Bohrfortschritts eine deutlich verbesserte Lebensdauer, gerade auch bei dem Bohren von inhomogenen Massen wie Hartsteineinschlüssen und Armierungen in Beton erreicht.

Diese Aufgabe wird erfindungsgemäß durch Anspruch 1 gelöst. Vorteilhafte Weiterbildungen ergeben sich aus den Unteransprüchen.

Durch die erfindungsgemäße Ausgestaltung der Hartmetallplatte des erfindungsgemäßen Steinbohrers läßt sich überraschenderweise ein nicht verschlechterter Bohrfortschritt, sondern ein deutlich erhöhter Bohrfortschritt mit einer wesentlich verbesserten Standzeit auch bei dem Bohren in armierungsintensivem Beton beobachten. Es hat sich gezeigt, daß die Standzeit großer Steinbohrer in der Praxis wesentlich von der Neigung zu Kantenbrüchen bestimmt ist, während der Verschleiß durch langsamen Materialabtrag demgegenüber deutlich weniger ins Gewicht fällt. Kantenbrüche können aber bereits kurz nach Erwerb des Bohrers auftreten, was regelmäßig eine besondere Verärgerung des Kunden hervorruft und erfindungsgemäß vermieden werden kann.

Auch ist es erfindungsgemäß nicht mehr notwendig, die bei teuren Großbohrern manchmal ins Auge gefaßte Auswechslung der Hartmetallplatte vorzunehmen. Der mit dem Auslöten, Richten und Einlöten der Hartmetallplatte verbundene Aufwand kann erfindungsgemäß vermieden werden, und auch der Transport des Bohers zu dem Betrieb, der dies vornimmt, also einer speziellen Fachwerkstatt oder meist dem Bohrerhersteller. Die erfindungsgemäße Hartmetallplatte stellt darüberhinaus sicher, daß es bei dem Bohren von Armierungen nicht mehr notwendig ist, den Andruck zu vermindern, so daß die gesamte Bohrzeit deutlich reduziert ist, selbst wenn der Bohrfortschritt in homogenem Gestein gegenüber einer besonders aggressiv geschnittenen Hartmetallplatte reduziert sein mag.

Erfindungsgemäß besonders günstig ist es, daß dennoch eine prägnante Hartmetallspitze vorgesehen ist, die das Zentrieren deutlich erleichtert. Damit wird aber auch die Abweichung von der gewünschten Bohrachse reduziert, was ebenfalls der Qualität der Ausbildung von Bohrlöchern in inhomogenem Bohrmaterial zugute kommt. Die bullig ausgebildete Hartmetallspitze schützt zugleich die Kanten der Hauptschneide, indem die dort erforderliche Ritzwirkung auf mehrere Spitzen verteilt wird. Die Nebenschneide ist zusätzlich geschützt, indem sie vor dem Ende der Hartmetallplatte endet, so daß sich eine Anfasung an das Ende der Nebenschneide anschließen kann. Dennoch kann mit einem steilen Vorschneidwinkel gearbeitet werden, so daß das gefürchtete Bohrmehlkissen vermeidbar ist.

Insgesamt ergibt sich mit der erfindungsgemäß besonderen Ausgestaltung somit eine verbesserte Unempfindlichkeit gegenüber Sonderbelastungen wie Hartsteineinschlüssen und Armierungen, gepaart aber mit einem nicht verschlechterten Bohrfortschritt.

Erfindungsgemäß besonders günstig ist die Realisierung einer Hartmetallplatte, die einen recht langen Schulterbereich mit einem großen Spitzenwinkel aufweist. Der Zentralbereich, der dementsprechend einen geringeren Spitzenwinkel aufweist, dient bei dieser Lösung der Zentrierung auf die erwünschte Bohrerachse. Damit wird die Neigung flacher Spitzenwinkel, aus der erwünschten Achsenzentrierung auszuweichen, deutlich kompensiert, und die Vorteile flacher Spitzenwinkel von beispielsweise 150° lassen sich so gut ausspielen. Die Zentrierwirkung wird hierbei zusätzlich von der Anfasung unterstützt, die einen Spitzenwinkel von beispielsweise 90° aufweisen kann.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine Seitenansicht einer Hartmetallplatte für einen erfindungsgemäßen Steinbohrer in einer Ausführungsform;
- Fig. 2: die Stirnansicht der Hartmetallplatte gemäß Fig. 1;

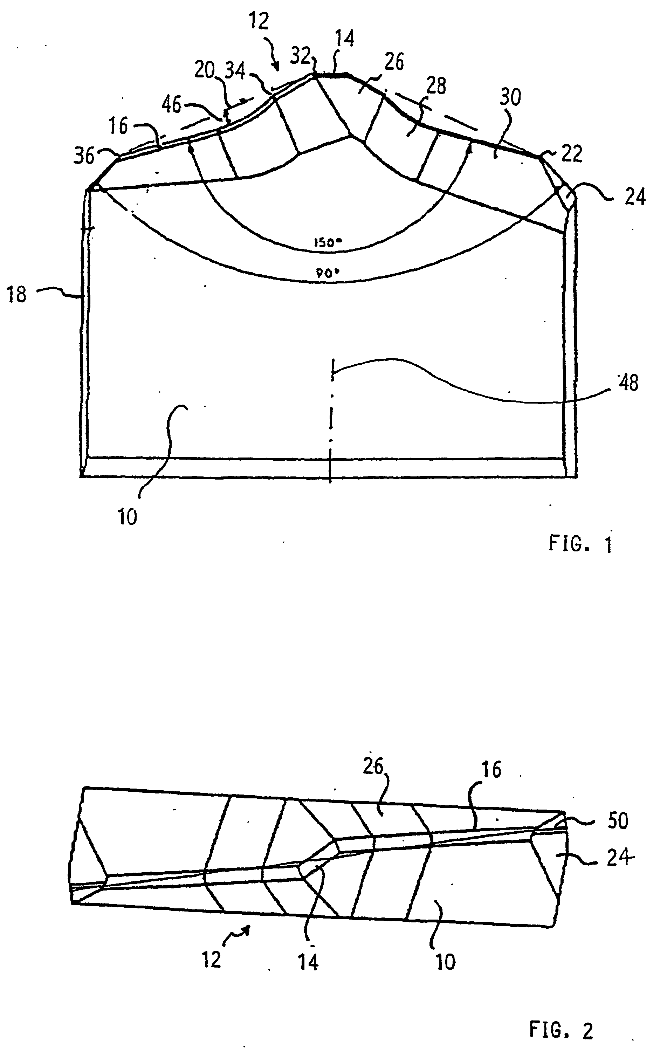

- Fig. 2: eine Stirnansicht auf die Hartmetallplatte in der Ausführungsform gemäß Fig. 1;

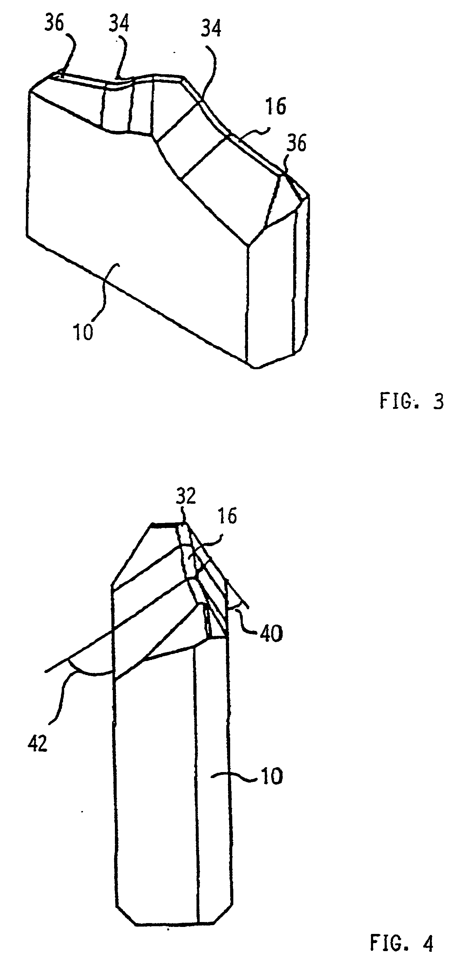

- Fig. 3: eine perspektivische Ansicht der Hartmetallplatte gemäß Fig. 1; und
- Fig. 4: eine Seitenansicht der Hartmetallplatte gemäß Fig. 1, jedoch von der Schmalseite.

Die in Fig. 1 dargestellte Hartmetallplatte 10 weist, wie es aus Fig. 1 ersichtlich ist, eine Hartmetallspitze 12 auf, die zentral vorragt. Die Hartmetallspitze 12 weist die Hauptschneide 14 auf, und seitlich der Hauptschneide 14 erstreckt sich die Nebenschneide 16. Die Nebenschneide 16 endet deutlich vor dem seitlichen Ende 18 der Hartmetallplatte 10. Durch die Hartmetallplatte wird ein Hüllkegel 20 aufgespannt, der von der Konfiguration der Hauptschneide 14 und dem Ende der Nebenschneide 16 bestimmt ist. Der Hüllkegel 20 weist einen Spitzenwinkel von etwa 130° auf, und die Nebenschneide 16 endet an einem Auftreffpunkt 22 auf den Hüllkegel 20.

Zwischen dem Ende 18 der Hartmetallplatte und dem Auftreffpunkt 22 erstreckt sich erfindungsgemäß eine Anfasung 24. Diese weist einen Spitzenwinkel von 90° auf, wobei es sich versteht, daß der Spitzenwinkel in weiten Bereichen an die Erfordernisse anpassbar ist.

Die Nebenschneide 16 ist in mehrere Abschnitte unterteilt. Anschließend an die Hauptschneide 14 und insofern als Teil der Hartmetallspitze 12 ist ein Zentralabschnitt 26 ausgebildet. Dieser Zentralabschnitt 26 weist einen kleineren Spitzenwinkel als den Hüllkegel-Spitzenwinkel auf, beispielsweise 120°.

Anschließend an den Zentralabschnitt 26 ist ein Konkavabschnitt 28 ausgebildet, dessen Spitzenwinkel sich über den Verlauf ändert und von innen nach außen zunimmt. Dem Zentralabschnitt 26 benachbart hat der Konkavabschnitt 28 in dem dargestellten Ausführungsbeispiel einen Spitzenwinkel von etwa 95°, wobei der Spitzenwinkel dann über den Verlauf des Konkavabschnitts 28 deutlich zunimmt. Anschließend an den Konkavabschnitt 28 ist ein Schulterabschnitt 30 ausgebildet, der einen Spitzenwinkel von 150° aufweist. Es ist bevorzugt, daß der Konkavabschnitt 28 an dem dem Schulterabschnitt 30 benachbarten Ende einen Spitzenwinkel von ebenfalls etwa 150° aufweist, so daß hier ein spitzen- und inneneckenfreier Übergang vorliegt.

Erfindungsgemäß besonders günstig ist es dementsprechend, daß über den radialen Verlauf des Bohrers eher weniger prägnante Spitzen vorliegen, die aufgrund des recht großen jeweiligen Spitzenwinkels eine ausgesprochen geringe Bruchneigung auch beim Auftreffen auf harte Armierungen zeigen. Die erste Spitze 32 besteht beim Übergang zwischen Hauptschneide 14 und Zentralabschnitt 26. Die zweite Spitze 34 besteht beim Übergang zwischen Zentralabschnitt 26 und Konkavabschnitt 28, und die dritte Spitze 36 besteht beim Übergang von Schulterabschnitt 30 zur Anfasung 24. Der Spitzenwinkel aller drei Spitzen unterschreitet je 155° nicht, so daß einerseits zwar die erwünschte Ritzwirkung sichergestellt ist, andererseits jedoch eine gute seitliche Abstützung vorliegt.

Aufgrund dieser guten Abstützung ist es möglich, mit einem aus Fig. 4 besser ersichtlichen kleinen Vorschneidwinkel zu arbeiten. Der Vorschneidwinkel beläuft sich im dargestellten Ausführungsbeispiel auf 32°, kann jedoch in weiten Bereichen an die Erfordernisse angepaßt werden. Auch der Nachschneidwinkel 42, der ebenfalls aus Fig. 4 gut ersichtlich ist, beträgt weniger als 70° und bevorzugt etwa 58°, so daß sich für die Nebenschneide in seitlicher Richtung betrachtet eine spitze Ausgestaltung ergibt, wobei die Summe von Vorschneidund Nachschneidwinkel 90° nicht übersteigt.

Wie aus Fig. 1 ersichtlich ist, erstreckt sich der Schulterabschnitt 30 über etwa die Hälfte der Länge der Nebenschneide 16. Es versteht sich, daß diese Strecke in weiten Bereichen an die Erfordernisse anpaßbar ist. Dies gilt im Grunde auch für das Rücksprungmaß 46 des Konkavabschnitts 28 gegenüber dem Hüllkegel 20. Dieses Rücksprungmaß beträgt in dem dargestellten Ausführungsbeispiel etwa 2,5 % des Bohrer-Nenndurchmessers. Durch die Anpassung des Rücksprungmaßes 46 an die Erfordernisse kann die Zentrierwirkung des erfindungsgemäßen Bohrers an die Erfordernisse angepaßt werden. Zudem kommt dieser Rücksprung, der als eine Art Einschnürung wirkt, der Bohrmehlabfuhr zugute.

Aus Fig. 2 ist gut der Verlauf der Hauptschneide 14 und der Nebenschneide 16 über die Hartmetallplatte 10 ersichtlich. Es ist deutlich, daß die Nebenschneide 16 sich stufenfrei erstreckt, so daß sie stabil und ohne Kantenbruchgefahr in der Hartmetallplatte 10 abgestützt ist. Die Anfasung 24 erstreckt sich leicht asymmetrisch gegen die Drehrichtung des Bohrers ausgerichtet und mit einem Winkel zur Bohrerachse 48, der etwa 90° beträgt. Die Größe der Anfasung 24 ist so gewählt, daß sie im wesentlichen dreieckig bleibt, also im Vorschneidbereich das Ende 18 gerade berührt. Gegebenenfalls kann die Anfasung 24 auch in sich leicht abgewinkelt sein, wie es über die Linie 50 in Fig. 2 angedeutet ist.

Aus Fig. 3 und 4 ist der Verlauf der Nebenschneide 16 über die Länge der Hartmetallplatte 10 recht gut ersichtlich. Die Kurvenführung ist treppenfrei nach außen abfallend, wobei die einzigen sich ergebenden Spitzen die zweite und dritte Spitze 34 und 36 sind. Die in Zusammenhang mit der Erfindung durchgeführten Untersuchungen haben gezeigt, daß das zusätzliche Vorsehen von prägnanten Treppenstufen, die die monoton fallende Kurvenführung der Nebenschneide unterbrechen, die Wirkung der Hauptschneide als Hauptschneidorgan beeinträchtigen.

## Patentansprüche

1. Steinbohrer, mit einer Hartmetallplatte (10), die sich quer durch einen Schlitz in der Bohrerspitze erstreckt und dort verankert ist, wobei die Hartmetallplatt (10) einen Hüllkegel (20) mit einem Spitzenwinkel von etwa 130° und eine ausgeprägte und zentrale Hartmetallspitze (12) aufweist, die die Hauptschneide (14) aufnimmt, **dadurch gekennzeichnet, daß** die Nebenschneide (16) seitlich der Hartmetallspitze (12) gegenüber dem Hüllkegel insbesondere in einem sich über einen Teil der Länge der Nebenschneide (16) erstreckenden Konkavabschnitt (28) zurückspringt und erst etwas vor dem Ende der Hartmetallplatte (10) diesen wieder erreicht und daß die Nebenschneide (16) einen kontinuierlichen Verlauf aufweist.

2. Steinbohrer nach Anspruch 1, **dadurch gekennzeichnet, daß** eine Anfasung (24), insbesondere mit einem Spitzenwinkel von etwa 90°, zwischen dem Auftreffpunkt (20) Hüllkegel/Nebenschneidplatte und dem Ende der Hartmetallplatte (10) ausgebildet ist.

3. Steinbohrer nach einem der vorhergehenden Ansprüche, **dadurch gekennzeichnet, daß** ein Zentralabschnitt (26) der Hartmetallplatte (10) der Hauptschneide (14) benachbart einen Spitzenwinkel von etwa 120° aufweist.

4. Steinbohrer nach einem der vorhergehenden Ansprüche, **dadurch gekennzeichnet, daß** die Hartmetallplatte (10) im Verlauf beider Nebenschneiden (16), insbesondere anschließend an den Zentralabschnitt (26), Konkavabschnitte (28), aufweist, in welchen die Nebenschneiden (16) konkav verlaufen.

5. Steinbohrer nach einem der vorhergehenden Ansprüche, **dadurch gekennzeichnet, daß** vom Auftreffpunkt (20) zur Bohrermitte hin benachbart ein Schulterabschnitt (30) vorgesehen ist, der einen vergrößerten Spitzenwinkel von etwa 150° aufweist.

6. Steinbohrer nach Anspruch 5, **dadurch gekennzeichnet, daß** sich der Schulterabschnitt (30) etwa über die halbe radiale Länge der Hartmetallplatte (10) erstreckt.

7. Steinbohrer nach einem der vorhergehenden Ansprüche, **dadurch gekennzeichnet, daß** die Anfasung (24) die Nebenschneide (16) abschneidet und als Fläche ausgebildet ist, deren Normale sich in Verlängerung der Hartmetallplatte (10), jedoch im Winkel von 45° in Vorwärtsrichtung des Bohrers betrachtet versetzt, erstreckt.

8. Steinbohrer nach einem der vorhergehenden Ansprüche, **dadurch gekennzeichnet, daß** die Nebenschneide (16) über ihrem Verlauf einen konstanten Vorschneidwinkel (40) aufweist, der insbesondere zwischen 25 und 40 und bevorzugt etwa 32° beträgt.

9. Steinbohrer nach einem der vorhergehenden Ansprüche, **dadurch gekennzeichnet, daß** die Nebenschneide (16) über ihrem Verlauf einen konstanten Nachschneidwinkel (42) aufweist, der insbesondere zwischen 50 und 70 und bevorzugt etwa 58° beträgt.

10. Steinbohrer nach einem der vorhergehenden Ansprüche, **dadurch gekennzeichnet, daß** die Breite des Zentralabschnitts (26) zwischen 8 und 35 % und bevorzugt etwa 22 % des Bohrer-Nenndurchmessers beträgt.

11. Steinbohrer nach einem der vorhergehenden Ansprüche, **dadurch gekennzeichnet, daß** die Nebenschneide (16) über ihrem radialen Verlauf stufenfrei ausgebildet ist und die Übergänge zwischen Hauptschneide (14) und Zentralabschnitt (26), Zentralabschnitt (26) und Konkavabschnitt (28) sowie Schulterabschnitt (30) und Anfasung je als Spitze (32,34,36) mit einem Spitzenwinkel von 170 bis 130° ausgebildet sind.

## Claims

1. A masonry drill bit with a hard metal tip (10) which extends transversely through a slot in the drill tip and is anchored therein, wherein the hard metal tip (10) has an enveloping cone (20) with a point angle of approximately 130° and a pronounced and central hard metal point (12) which receives the main cutting edge (14), **characterised in that** the secondary cutting edge (16) is set back laterally of the hard metal point (12) with respect to the enveloping cone, in particular in a concave portion (28) extending over part of the length of the secondary cutting edge (16), and only just reaches it again slightly before the end of the hard metal tip (10), and **in that** the secondary cutting edge (16) has a continuous course.

2. A masonry drill bit according to Claim 1, **characterised in that** a chamfer (24), in particular at a point angle of approximately 90°, is formed between the enveloping cone/secondary cutting edge impingement point (20) and the end of the hard metal tip (10).

3. A masonry drill bit according to any one of the preceding Claims, **characterised in that** a central portion (26) of the hard metal tip (10) adjoining the main cutting edge (14) has a point angle of approximately 120°.

4. A masonry drill bit according to any one of the preceding Claims, **characterised in that** the hard metal tip (10) has concave portions (28) in the course of both secondary cutting edges (16), particularly adjacent the central portion (26), in which concave portions the secondary cutting edges (16) extend concavely.

5. A masonry drill bit according to any one of the preceding Claims, **characterised in that** from the impingement point (20) towards the drill bit centre an adjoining shoulder portion (30) is provided which has an enlarged point angle of approximately 150°.

6. A masonry drill bit according to Claim 5, **characterised in that** the shoulder portion (30) extends approximately over half the radial length of the hard metal tip (10).

7. A masonry drill bit according to any one of the preceding Claims, **characterised in that** the chamfer (24) cuts off the secondary cutting edge (16) and is in the form of a surface whose normal extends in prolongation of the hard metal tip (10) but is offset at an angle of 45°, viewed in the forward direction of the drill bit.

8. A masonry drill bit according to any one of the preceding Claims, **characterised in that** over its course the secondary cutting edge (16) has a constant rough-cut angle (40) which, in particular, is between 25 and 40 and, preferably, approximately 32°.

9. A masonry drill bit according to any one of the preceding Claims, **characterised in that** the secondary cutting edge (16) has over its course a constant reaming angle (42) which, in particular, is between 50 and 70 and, preferably, approximately 58°.

10. A masonry drill bit according to any one of the preceding Claims, **characterised in that** the width of the central portion (26) is between 8 and 35 % and, preferably, approximately 22 % of the nominal drill bit diameter.

11. A masonry drill bit according to any one of the preceding Claims, **characterised in that** the secondary cutting edge (16) is formed without steps over its radial course and the transitions between the main cutting edge (14) and the central portion (26), central portion (26) and concave portion (28), as well as shoulder portion (30) and chamfer are respectively in the form of a point (32,34,36) with a point angle of 170 to 130°.

## Revendications

1. Foret à pierre, ayant une plaque en métal dur (10) qui s'étend transversalement à travers une fente dans la pointe du foret et qui y est ancrée, la plaque en métal dur (10) étant munie d'un cône enveloppant (20) ayant un angle de pointe de 130° environ et d'une pointe centrale étendue en métal dur (12), qui réceptionne le tranchant principal (14), **caractérisé en ce que** le tranchant auxiliaire (16) retourne vers l'arrière, latéralement à la pointe en métal dur (12), vis-à-vis du cône enveloppant, notamment dans un segment concave (28) qui s'étend sur une partie de la longueur du tranchant auxiliaire (16), et ne l'atteint à nouveau que justement avant l'extrémité de la plaque en métal dur (10), et **en ce que** le tranchant auxiliaire (16) présente un trajet continu.

2. Foret à pierre selon la revendication 1, **caractérisé en ce qu'**un chanfrein (24), notamment avec un angle de pointe de 90° environ, est formé entre le point de rencontre (20) cône enveloppant/plaque du tranchant auxiliaire et l'extrémité de la plaque en métal dur (10).

3. Foret à pierre selon l'une quelconque des revendications précédentes, **caractérisé en ce qu'**un segment central (26) qui est voisin du tranchant principal (14) de la plaque en métal dur (10) présente un angle de pointe de 120° environ.

4. Foret à pierre selon l'une quelconque des revendications précédentes, **caractérisé en ce que** sur le trajet des deux tranchants auxiliaires (16), notamment dans la continuité du segment central (26), la plaque en métal dur (10) présente des segments concaves (28) dans lesquels les tranchants auxiliaires (16) s'étendent de façon concave.

5. Foret à pierre selon l'une quelconque des revendications précédentes, **caractérisé en ce qu'**un segment d'épaulement (30) présentant un angle de pointe agrandi de 150° environ est prévu dans le voisinage du point de rencontre (20) vers le milieu du foret.

6. Foret à pierre selon la revendication 5, **caractérisé en ce que** le segment d'épaulement (30) s'étend approximativement sur la moitié de la longueur radiale de la plaque en métal dur (10).

7. Foret à pierre selon l'une quelconque des revendications précédentes, **caractérisé en ce que** le chanfrein (24) recoupe le tranchant auxiliaire (16) et est conçu sous forme d'une surface, dont la normale s'étend dans le prolongement de la plaque en métal dur (10), toutefois avec un déport de l'angle de 45°, considéré dans le sens d'avance du foret.

8. Foret à pierre selon l'une quelconque des revendications précédentes, **caractérisé en ce que** sur son trajet, le tranchant auxiliaire (16) présente un angle d'ébauche constant (40) qui est compris de préférence entre 25 et 40° et qui est de préférence de 32° environ.

9. Foret à pierre selon l'une quelconque des revendications précédentes, **caractérisé en ce que** sur son trajet, le tranchant auxiliaire (16) présente un angle de repassage constant (42) qui est compris entre 50 et 70° et qui est de préférence de 58° environ.

10. Foret à pierre selon l'une quelconque des revendications précédentes, **caractérisé en ce que** la largeur du segment central (26) est comprise entre 8 et 35 % et est de préférence de 22 % environ du diamètre nominal du foret.

11. Foret à pierre selon l'une quelconque des revendications précédentes, **caractérisé en ce que** le tranchant auxiliaire (16) est conçu sans échelonnement sur son trajet radial et **en ce que** les passages entre le tranchant principal (14) et le segment central (26), le segment central (26) et le segment concave (28), ainsi qu'entre le segment d'épaulement (30) et le chanfrein sont respectivement conçus en tant que pointes (32, 34, 36) ayant un angle de pointe de 170 à 130°.
